# EUROPEAN PATENT APPLICATION

(11) **EP 4 714 795 A1**
(43) Date of publication of application: **25.03.2026**
(21) Application number: 25191894.2
(22) Date of filing: 25.07.2025
(51) Int. Cl.: B62D 25/20, B60K 1/04, B62D 21/15, B62D 27/06

(54) **VEHICLE LOWER BODY STRUCTURE**

(30) Priority: 20.09.2024 JP 2024163860
(71) Applicant: MAZDA MOTOR CORPORATION, Hiroshima 730-8670 (JP)
(72) Inventor: Kubota, Harumitsu, Aki-gun, Hiroshima, 730-8670 (JP); Yamada, Morihide, Aki-gun, Hiroshima, 730-8670 (JP); Saeki, Takuya, Aki-gun, Hiroshima, 730-8670 (JP); Imamura, Satoshi, Aki-gun, Hiroshima, 730-8670 (JP); Kondo, Hidenari, Aki-gun, Hiroshima, 730-8670 (JP)
(74) Representative: Lorenz Seidler Gossel Part. mbB

(57) **Abstract**

To provide a vehicle lower body structure capable of suppressing upward displacement of a tunnel section due to a side collision load applied from a vehicle lateral side, a lower body structure of a vehicle (1) includes: a tunnel section (5) protruding upward in a central position of a front floor panel (4) in a vehicle width direction; a pair of left and right side sills (3) extending in a vehicle front-rear direction at both lateral ends of the front floor panel (4) in the vehicle width direction; a floor cross member (6) coupling the pair of left and right side sills (3) in the vehicle width direction across the tunnel section (5) and fixed to an upper surface of the front floor panel (4); and a battery unit (7) disposed below the front floor panel (4). Then, a portion of the floor cross member (6) across the tunnel section (5) is coupled to the tunnel section (5) and the battery unit (7) via a coupling member (80).

## Description

The present invention relates to a vehicle lower body structure including a floor tunnel that extends in a vehicle front-rear direction, for example.

In a vehicle such as an automobile, a cross member coupling a pair of left and right side sills provided on both end sides in a vehicle width direction may be fixed to a floor panel in order to suppress deformation of a cabin due to a collision load from a vehicle lateral side. As a result, a side collision load, which is a collision load from the vehicle lateral side, can be transmitted from one of the side sills to the other side sill via the cross member.

For example, in JP 2023-080379 A, the plural cross members, each of which couples the pair of left and right side sills in the vehicle width direction, are fixed to an upper surface of the floor panel, and the side collision load can be transmitted via the plural cross members. In this way, the side collision load can be dispersed and transmitted from the one side sill to the other side sill.

By the way, in an electric vehicle using output of a rotary electric machine as a driving force, a battery unit for supplying electric power to the rotary electric machine may be disposed below the floor panel in the vehicle, but depending on a layout of the battery unit, a tunnel section protruding upward may be provided at a central position in the vehicle width direction in the floor panel.

However, in the case where the tunnel section is provided, the cross member cannot extend straight in the vehicle width direction, and thus, there is a possibility that the tunnel section is displaced upward due to the collision load from the vehicle lateral side.

As state of the art the document JP 2023-080379 A is known.

An object of the invention is to provide a vehicle lower body structure capable of suppressing upward displacement of a tunnel section due to a side collision load applied from a vehicle lateral side.

### [Solution to Problem]

The invention is a vehicle lower body structure including: a tunnel section that protrudes upward in a central position of a floor panel in a vehicle width direction; a pair of left and right side sills that extend in a vehicle front-rear direction at both lateral ends of the floor panel in the vehicle width direction; a floor cross member that couples the pair of left and right side sills in the vehicle width direction across the tunnel section and is fixed to an upper surface of the floor panel; and a battery unit that is disposed below the floor panel, in which a portion of the floor cross member across the tunnel section is coupled to the tunnel section and the battery unit via a coupling member.

The floor cross member includes a floor cross member in an opened cross-sectional shape that forms a closed cross section with the floor panel, a floor cross member having a closed cross-sectional shape such as a cylindrical body, or the like.

The side sill and the cross member may be coupled by directly connecting both end portions of the cross member and the side sill, or may be coupled via a seat attachment bracket or a gusset provided to both end portions of the cross member.

According to the invention, it is possible to suppress upward displacement of the tunnel section by a side collision load applied from a vehicle lateral side.

More specifically, the floor cross member couples the pair of left and right side sills in the vehicle width direction across the tunnel section, and the portion thereof across the tunnel section couples the tunnel section and the battery unit via the coupling member. Accordingly, in the vehicle lower body structure, the floor cross member can efficiently transmit a side collision load, which is a collision load from a vehicle lateral side, from one side sill to the other side sill, and the battery unit as a highly rigid heavy object can suppress upward displacement of the tunnel section by the side collision load.

In addition, in the portion across the tunnel section, the vehicle lower body structure is coupled to the tunnel section and the battery unit via the coupling member. Thus, there is no need to provide a reinforcing member for suppressing deformation of the tunnel section by the side collision load. Thus, the vehicle lower body structure can suppress the upward displacement of the tunnel section while suppressing an increase in the number of components.

As an aspect of the invention, the coupling member may abut both an upper surface of the battery unit and a lower surface of the tunnel section, may extend in an up-down direction, and may be fastened by a bolt, which is inserted through the floor cross member and the tunnel section, from an upper side of the floor cross member.

According to the invention, in the portion across the tunnel section, the bolt can be inserted through the floor cross member and the tunnel section from a cabin inner side and can be fastened to the coupling member. **In** this way, the floor cross member can easily be coupled to the battery unit, which is disposed below the floor panel, and to the tunnel section. Therefore, the vehicle lower body structure can improve workability of coupling work to couple the battery unit to the floor cross member and the tunnel section.

As an aspect of the invention, the coupling member may be arranged at a center of the tunnel section in the vehicle width direction.

According to the invention, the vehicle lower body structure can reliably suppress displacement of a central portion of the tunnel section in the vehicle width direction, the central portion being most likely to be displaced upward by the side collision load.

As an aspect of the invention, a plurality of the floor cross members may be arranged side by side in the vehicle front-rear direction, and each of the floor cross members may be coupled to the battery unit via the coupling member.

According to the invention, each of the plural floor cross members provided side by side in the vehicle front-rear direction is coupled to the tunnel section and the battery unit via the coupling member. Thus, compared to a case where the single floor cross member is coupled to the battery unit, the vehicle lower body structure can reliably suppress the upward displacement of the tunnel section by the side collision load within a predetermined range in the vehicle front-rear direction.

As an aspect of the invention, the floor cross member may have: a first cross member that is provided on a vehicle front side; a second cross member that is provided at a position on a vehicle rear side at a predetermined interval from the first cross member; and a third cross member that is provided between the first cross member and the second cross member in the vehicle front-rear direction and is fixed to each of the first cross member and the second cross member.

According to the invention, the third cross member is fixed to each of the first cross member and the second cross member, and each of the floor cross members is fixed to the upper surface of the floor panel. Accordingly, in cooperation with the floor panel, the first cross member, the second cross member, and the third cross member, which are fixed to each other, can improve rigidity of a body against the side collision load as a collision load from the vehicle lateral side.

As a result, the vehicle lower body structure can efficiently transmit the side collision load, which is applied from the vehicle lateral side, from the one side sill to the other side sill via the first cross member, the second cross member, and the third cross member, which are fixed to each other. Therefore, for example, even when a narrow collision object, such as a utility pole, collides with a vehicle lateral portion, the vehicle lower body structure can further suppress the upward displacement of the tunnel section.

As an aspect of the invention, the battery unit may be fixed to a highly rigid portion in a body of a vehicle, and a seat attachment section for attaching a seat may be provided in the portion of the floor cross member across the tunnel section.

The highly rigid portion is a portion in which a vertical cross-sectional shape along the vehicle front-rear direction or the vehicle width direction is a closed cross-sectional shape, more preferably, a body frame member that constitutes a body frame of the vehicle. Examples thereof include the side sill, the floor frame, a rear portion of the front side frame, and a torque box that couples the front side frame to the side sill.

According to the invention, the vehicle lower body structure can suppress the displacement of the seat in the vehicle up-down direction. Thus, it is possible to prevent an occupant who is seated on a seat from having a feeling of strangeness and a sense of discomfort.

More specifically, since the coupling member, which couples the tunnel section and the battery unit, supports the tunnel section from below in the vehicle, it is possible to suppress the displacement of the tunnel section in the vehicle up-down direction, which is caused by the load in the vehicle up-down direction applied to the seat attachment section.

More specifically, since the displacement of the tunnel section in the vehicle up-down direction can be suppressed, it is possible to suppress sinking of the seat, which is attached to the portion of the floor cross member across the tunnel section, due to the load in a vehicle up direction or a vehicle down direction that is associated with movement of a load of the occupant seated on the seat occurring, for example, when the vehicle turns and that is applied to the seat attachment section via the seat. Therefore, the vehicle lower body structure can prevent the occupant who is seated on the seat from having the feeling of strangeness with respect to steering stability or having the sense of discomfort due to sinking of the seat.

According to the invention, it is possible to provide the vehicle lower body structure capable of suppressing the upward displacement of the tunnel section due to the side collision load applied from the vehicle lateral side.

### Brief Description of Drawings:

FIG. 1 is an external perspective view illustrating external appearance of a vehicle lower body that is viewed from the front of a vehicle.
FIG. 2 is a plan view illustrating the external appearance of the vehicle lower body in a plan view.
FIG. 3 is an external perspective view illustrating external appearance of a main section of the vehicle lower body that is viewed from the rear of the vehicle.
FIG. 4 is a cross-sectional view that is taken along an arrow A-A in FIG.2.
FIG. 5 is a cross-sectional view that is taken along an arrow C-C in FIG. 2.
FIG. 6 is an enlarged cross-sectional view of a main section in FIG. 5.
FIG. 7 is a cross-sectional view that is taken along an arrow B-B in FIG. 2.

An embodiment of the invention will be described below with reference to the drawings.

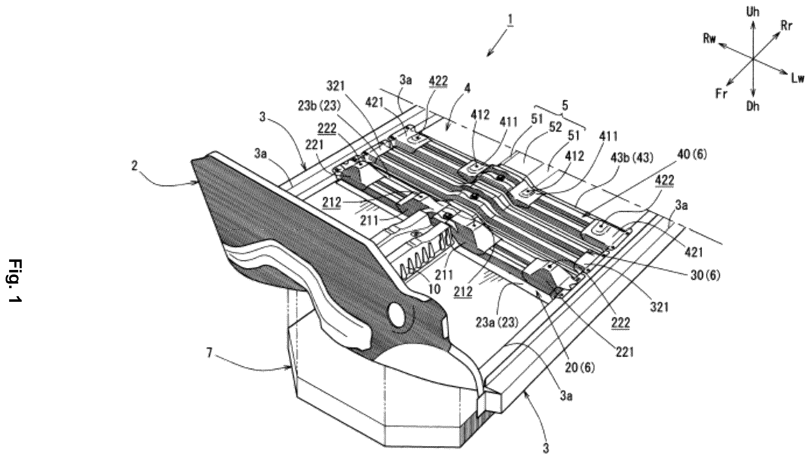

A vehicle 1 in this embodiment is, for example, an electric vehicle including a tunnel section 5 that extends in a vehicle front-rear direction at substantially a center of a front floor panel 4 in a vehicle width direction. A lower body structure on a vehicle front side in a cabin portion of such a vehicle 1 will be described in detail with reference to FIGs. 1 to 7.

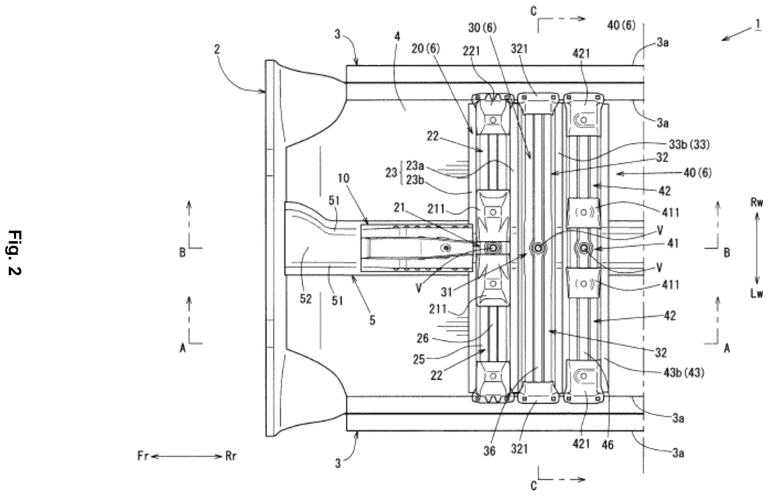

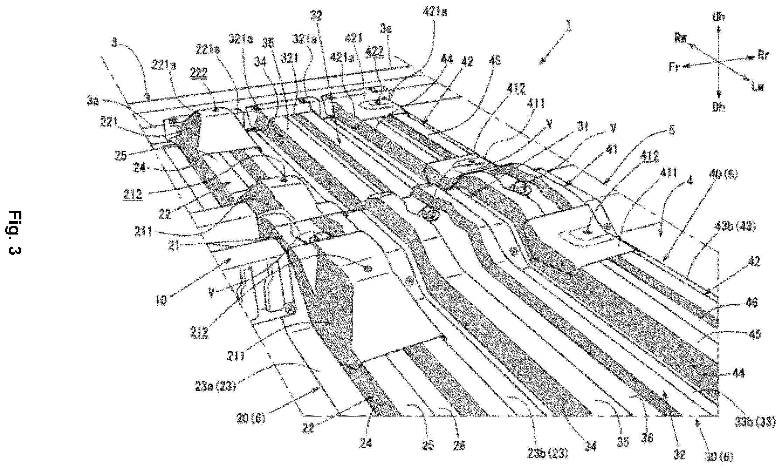

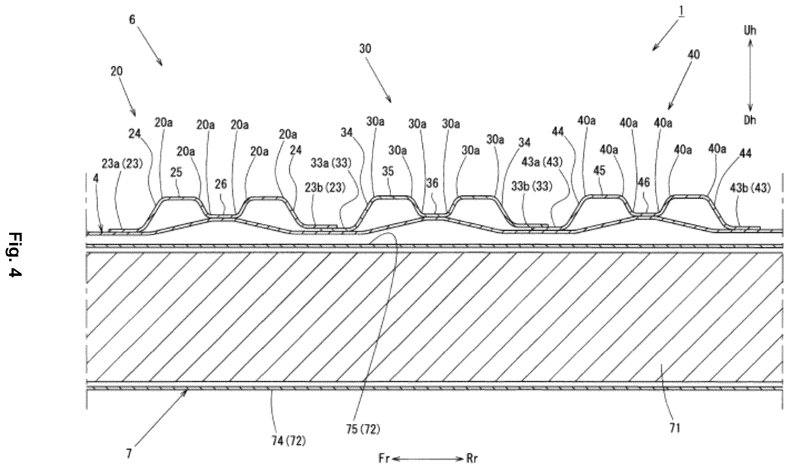

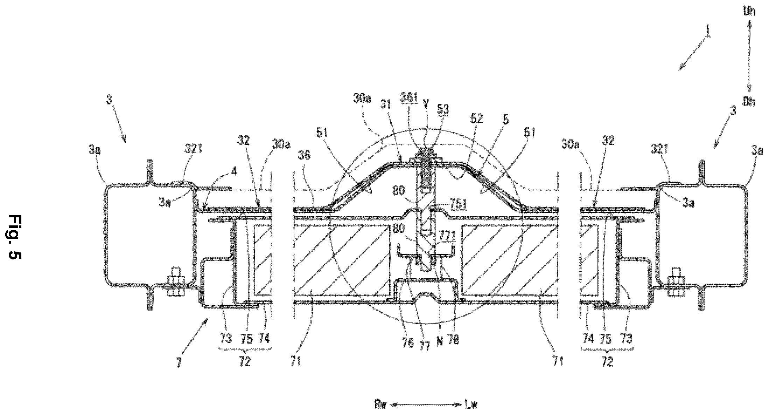

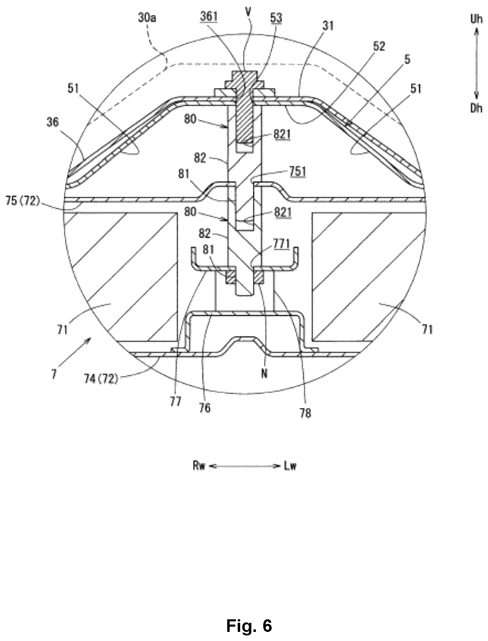

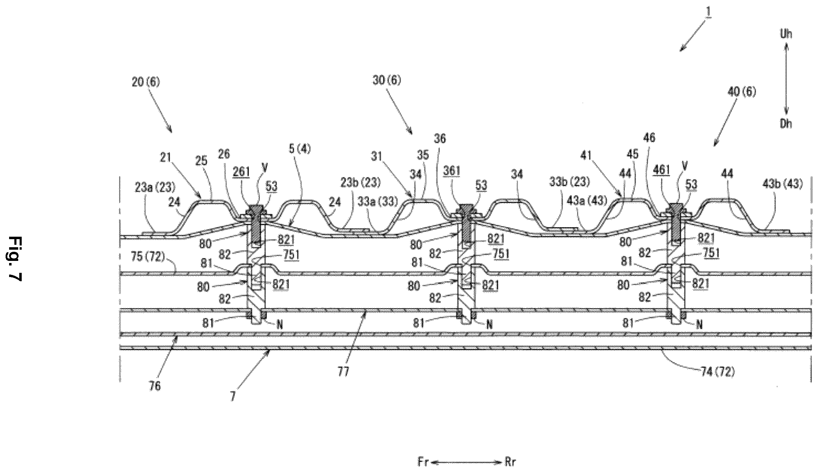

FIG. 1 is an external perspective view of a lower body of the vehicle 1 that is viewed from the front of the vehicle, FIG. 2 is a plan view of the lower body of the vehicle 1, and FIG. 3 is an external perspective view illustrating external appearance of a main section in the lower body of the vehicle 1 that is viewed from the rear of the vehicle. FIG. 4 is a cross-sectional view that is taken along an arrow A-A in FIG. 2, FIG. 5 is a cross-sectional view that is taken along an arrow C-C in FIG. 2, FIG. 6 is an enlarged cross-sectional view of a main section that is surrounded by a circle in FIG. 5, and FIG. 7 is a cross-sectional view of a main section that is taken along an arrow B-B in FIG. 2.

In the drawings, arrows Fr and Rr indicate the front-rear direction, an arrow Fr indicates a front direction, and an arrow Rr indicates a rear direction. Arrows Rw and Lw indicate the vehicle width direction, an arrow Rw indicates a right direction, and an arrow Lw indicates a left direction. Furthermore, arrows Uh and Dh indicate a vehicle up-down direction, an arrow Uh indicates a vehicle up direction, and an arrow Dh indicates a vehicle down direction.

As illustrated in FIGs. 1 and 2, the lower body of the vehicle 1 includes: a dashboard 2 that separates an engine room and the cabin in the vehicle front-rear direction; a pair of left and right side sills 3 that extend rearward in the vehicle from lower portions at both ends of the dashboard 2 in the vehicle width direction; and a front floor panel 4 that is disposed between the left and right side sills 3 and forms a cabin floor surface.

As illustrated in FIGs. 1, 2, and 3, the front floor panel 4 is formed with a tunnel section 5 near a substantial center in the vehicle width direction, the tunnel section 5 bulging in the vehicle up direction in a substantially tunnel shape and extending from the front of the vehicle toward the rear of the vehicle. In addition, in the lower body of the vehicle 1, at a position near the center of the front floor panel 4 in the vehicle front-rear direction, the floor cross member 6 that couples the pair of left and right side sills 3 in the vehicle width direction across the tunnel section 5 is fixed to an upper surface of the front floor panel 4. Furthermore, a battery unit 7 coupled to a highly rigid portion of the body is disposed below the front floor panel 4.

More specifically, the dashboard 2 is a panel member that is thick in the vehicle front-rear direction, and is formed in such a shape that a lower portion thereof is curved rearward in the vehicle. From a lower end of this dashboard 2, the front floor panel 4 is provided to extend rearward in the vehicle.

The side sills 3 are provided as the left and right pair that extends rearward in the vehicle from the lower portions at both ends of the dashboard 2 in the vehicle width direction, and are each configured to have a substantially rectangular closed cross section. That is, at corners of an upper surface portion of the side sill 3, ridgeline sections 3a, each of which extends in the vehicle front-rear direction, are formed at predetermined intervals in the vehicle width direction.

As illustrated in FIGs. 2 and 4, the front floor panel 4 is a panel member that is thick in the vehicle up-down direction. A front end thereof is coupled to the lower end of the dashboard 2, and both end portions in the vehicle width direction are joined to the respective side sills 3. Then, at the substantial center of the front floor panel 4 in the vehicle width direction, as described above, the tunnel section 5 is formed to protrude in the vehicle up direction.

As illustrated in FIGs. 3 and 4, the tunnel section 5 is formed to have a substantially hat-shaped cross section that protrudes in the vehicle up direction, and extends from the front end to a rear end of the front floor panel 4 in the vehicle front-rear direction. An end portion on the vehicle front side in the tunnel section 5 is joined to the dashboard 2. The front end portion of the tunnel section 5 is covered with a console bracket 10.

More specifically, as illustrated in FIGs. 3 and 5, the tunnel section 5 includes: a pair of left and right side wall portions 51 that are erected upward from the front floor panel 4 while being inclined toward the center in the vehicle width direction; and a tunnel upper portion 52 that has a substantially planar shape and couples upper end portions of the pair of left and right side wall portions 51. Here, the height of the side wall portion 51 from the front floor panel 4 is slightly greater than the height of the side sill 3 from the front floor panel 4.

On a vehicle front side of a front cross member 20, which will be described below, the tunnel upper portion 52 is inclined downward in the vehicle in the vehicle rear direction, and, on a vehicle rear side of the front cross member 20, extends substantially horizontally along the vehicle front-rear direction.

As illustrated in FIGs. 5 and 6, in a central portion of the thus-configured tunnel upper portion 52 in the vehicle width direction, plural through holes 53 penetrating in the vehicle up-down direction are provided at predetermined intervals in the vehicle front-rear direction.

As illustrated in FIG. 2, the floor cross member 6 includes the front cross member 20, an intermediate cross member 30, and a rear cross member 40, each of which couples the left and right side sills 3 in the vehicle width direction, is fixed to the upper surface of the front floor panel 4, and has a substantially M-shaped cross section.

As illustrated in FIGs. 2, 3, and 4, the front cross member 20, the intermediate cross member 30, and the rear cross member 40 are arranged in this order from the vehicle front side toward the vehicle rear side while coupling the pair of left and right side sills 3 in the vehicle width direction across the tunnel section 5 that extends in the vehicle front-rear direction. That is, at positions near the center of the front floor panel 4 in the vehicle front-rear direction, the front cross member 20, the intermediate cross member 30, and the rear cross member 40 couple the pair of left and right side sills 3 substantially linearly in a plan view.

As illustrated in FIGs. 2 and 3, the front cross member 20 is arranged on the vehicle front side of the intermediate cross member 30, and is provided to extend in the vehicle width direction across the tunnel section 5. More specifically, the front cross member 20 includes: a crossing section 21 crossing the tunnel section 5 in a central portion in the vehicle width direction; and a pair of left and right member bodies 22, each of which extends in the vehicle width direction, between outer end portions of the crossing sections 21 in the vehicle width direction and the respective side sills 3.

As illustrated in FIGs. 2 and 3, the crossing section 21 is formed to bulge in the vehicle up direction along the tunnel section 5 when compared to the member bodies 22. In each outer portion of the crossing section 21 in the vehicle width direction, a front inner seat bracket 211 for attaching a front seat (not illustrated) is provided in a manner to extend across a boundary portion with the respective member body 22.

As illustrated in FIGs. 2 and 3, the front inner seat bracket 211 has a substantially box shape in which a central portion in the vehicle width direction is formed in a substantial chevron shape protruding upward, and an outer side in the vehicle width direction and a vehicle lower side of which are opened, and a vertical cross-sectional shape along the vehicle width direction is a closed cross-sectional shape formed by the front floor panel 4 and the tunnel section 5. An upper end surface of the thus-configured front inner seat bracket 211 is set above the tunnel upper portion 52, and has a front inner attachment hole 212 for attaching a vehicle front side of the front seat. The front inner seat bracket 211, the tunnel section 5, and the front cross member 20 are fixed to each other when being joined by welding such as spot welding.

As illustrated in FIG. 2, the member bodies 22 each extend in the vehicle width direction continuously from the respective outer end portion of the crossing section 21 in the vehicle width direction, and are respectively joined to the pair of left and right side sills 3 via the front outer seat brackets 221 that are provided in both end portions in the vehicle width direction.

The front outer seat bracket 221 and the front inner seat bracket 211 have substantially bilaterally symmetrical shapes. More specifically, the front outer seat bracket 221 has a substantially box shape in which a central portion in the vehicle width direction is formed in a substantial chevron shape protruding upward, and an outer side in the vehicle width direction and a vehicle lower side of which are opened, and a vertical cross-sectional shape along the vehicle front-rear direction has a closed cross section that is formed by the side sill 3 and the member body 22. The front outer seat bracket 221 in such a shape has a ridgeline section 221a in an upper portion.

In addition, an upper surface on the vehicle outer side of the front outer seat bracket 221 is joined to the side sill 3, while an upper surface on the vehicle inner side of the front outer seat bracket 221 is fixed to a coupling section 25, which will be described below, by welding such as spot welding. The front outer seat bracket 221, which couples the side sill 3 and the coupling section 25, is set at a higher position than the side sill 3, and has a front outer attachment hole 222 for attaching the vehicle front side of the front seat in an upper end surface.

As illustrated in FIG. 4, the front cross member 20, which couples the side sills 3 while extending across the tunnel section 5 along the tunnel section 5 as described above, is provided with a pair of flange sections 23 extending in the vehicle front-rear direction along the vehicle width direction on both sides in the vehicle front-rear direction. The flange section 23 and the front floor panel 4 are joined by welding such as spot welding. As a result, the front cross member 20 forms a closed cross section with the front floor panel 4.

In the crossing section 21, both end portions of the flange section 23 in the vehicle width direction are inclined along the pair of left and right side wall portions 51. In the crossing section 21, a central portion of the flange section 23 in the vehicle width direction is substantially horizontal along the tunnel upper portion 52 (see FIG. 5). The flange section 23 provided in the crossing section 21, which protrudes in the vehicle up direction, as described above is fixed when being joined to the tunnel section 5, which constitutes the front floor panel 4, by spot welding or the like.

Here, of the pair of flange sections 23 that extend in the vehicle front-rear direction, the flange section 23 on the vehicle front side is defined as a front flange section 23a, and the flange section 23 on the vehicle rear side is defined as a rear flange section 23b.

As illustrated in FIG. 4, in a vertical cross section along the vehicle front-rear direction, such a front cross member 20 is formed to have the substantially M-shaped cross section. More specifically, on inner end portions of the flange sections 23 in the vehicle front-rear direction in the front cross member 20, the front cross member 20 has: a pair of front and rear erected sections 24, each of which is inclined toward the other of the paired flange sections 23 while extending in the vehicle up direction; and the coupling section 25 that couples upper ends of the erected sections 24 from one end to the other end in the vehicle width direction.

The coupling section 25 is set such that a position of an upper surface thereof is aligned with a position of the upper surface of the side sill 3 in the vehicle up-down direction, and is joined to the side sill 3 via the front outer seat bracket 221. That is, the side sill 3 and the coupling section 25 are coupled by the front outer seat bracket 221.

In addition, as illustrated in FIGs. 2 and 4, in a central portion of the coupling section 25 in the vehicle front-rear direction, a recessed groove 26 is provided to extend from one end to the other end of the front cross member 20 in the vehicle width direction, the recessed groove 26 being recessed downward for approximately half a length of the erected section 24 in the vehicle up-down direction. Here, a lower surface of the recessed groove 26 is joined to a convex portion of the front floor panel 4 that is formed in a corrugated shape along the vehicle front-rear direction.

It is configured that a width in the vehicle front-rear direction of a central portion of the recessed groove 26 in the crossing section 21 is greater than a width in the vehicle front-rear direction of the recessed groove 26 in another portion such as the member body 22. More specifically, the central portion of the crossing section 21 is formed in a hexagonal shape in the plan view in which the groove width of the recessed groove 26 is greater than that in the other portion such as the member body 22 (see FIG. 2). Then, in a central portion of the recessed groove 26 in the crossing section 21, a cross member through hole 261 that is inserted through the through hole 53 and penetrates in the vehicle up-down direction (see FIGs. 5 and 6).

As illustrated in FIG. 4, the thus-configured front cross member 20 is formed with a pair of left and right ridgeline sections 20a in a corner portion between the erected section 24 and the coupling section 25 and a corner portion of the recessed groove 26 in the coupling section 25, the pair of left and right ridgeline sections 20a extending in the vehicle width direction at predetermined intervals in the vehicle front-rear direction.

Then, the front cross member 20 and the side sill 3 are coupled to each other via the front outer seat bracket 221 such that the ridgeline section 20a, which is formed in the corner portion between the erected section 24 and the coupling section 25, and the ridgeline section 3a, which is set to align the positions of the upper surface of the side sill 3 and the upper surface of the coupling section 25 in the vehicle up-down direction, in the side sill 3 continue via the ridgeline section 221a of the front outer seat bracket 221 (see FIG. 3).

Here, similar to the ridgeline section 3a, which is formed in the corner portion of the upper surface of the side sill 3 and extends in the vehicle front-rear direction, in the side sill 3, rigidity of the ridgeline section 20a, which is formed in the front cross member 20 and extends in the vehicle width direction, in the front cross member 20 is higher than that of other portions (flat portions) in the respective member.

The intermediate cross member 30 that is arranged on the vehicle rear side of the front cross member 20 has substantially the same configuration as the front cross member 20. More specifically, as illustrated in FIGs. 2, 3, and 4, the intermediate cross member 30 includes a crossing section 31 in a central portion in the vehicle width direction and a pair of left and right member bodies 32, the crossing section 31 being provided to extend in the vehicle width direction across the tunnel section 5, and the pair of left and right member bodies 32, each of which extends in the vehicle width direction between an outer end portion of the crossing section 31 in the vehicle width direction and the respective side sill 3.

The crossing section 31 has substantially the same configuration as the crossing section 21 except that the front inner seat bracket 211 is not provided. Thus, a detailed description thereon will not be made.

The member body 32 has substantially the same configuration as the member body 22 except that a pair of gussets 321 are provided instead of the pair of the front outer seat brackets 221.

The gusset 321 each has a substantially box shape in which an outer side in the vehicle width direction and the vehicle lower side are opened, and a vertical cross-sectional shape along the vehicle width direction has a closed cross section that is formed by the front floor panel 4, the tunnel section 5, and the intermediate cross member 30. The thus-configured gussets 321 are fixed to the pairs of left and right side sills 3 and the member bodies 32 when being joined by welding such as spot welding. The gussets 321 each have a ridgeline section 321a in an upper portion thereof.

More specifically, an upper surface of the gusset 321 on the vehicle outer side is joined to the upper surface of the side sill 3 by welding such as spot welding, and an upper surface of the gusset 321 on the vehicle inner side is joined to a coupling section 35, which will be described below and corresponds to the coupling section 25, by welding such as spot welding.

Similar to the front cross member 20, in a vertical cross section along the vehicle front-rear direction, such an intermediate cross member 30 is formed to have a substantially M-shaped cross section. More specifically, the intermediate cross member 30 includes a flange section 33, an erected section 34, and the coupling section 35, and, similar to the recessed groove 26, a recessed groove 36 that has a cross member through hole 361 is provided to extend in the vehicle width direction in a central portion of the coupling section 35 in the vehicle front-rear direction (see FIGs. 4, 5, and 6).

Here, since the flange section 33, the erected section 34, the coupling section 35, the recessed groove 36, and the cross member through hole 361 have substantially the same configurations as the flange section 23, the erected section 24, the coupling section 25, the recessed groove 26, and the cross member through hole 261, respectively, a detailed description thereon will not be made. In addition, similar to the front cross member 20, the intermediate cross member 30 is formed with a pair of left and right ridgeline sections 30a in a corner portion between the erected section 34 and the coupling section 35 and a corner portion of the recessed groove 36 in the coupling section 35, the pair of left and right ridgeline sections 30a extending in the vehicle width direction at predetermined intervals in the vehicle front-rear direction.

As described above, the positions of the upper surface of the coupling section 35 and the upper surface of the side sill 3 are set to be aligned in the vehicle up-down direction, and the gusset 321 is joined thereto. In this way, the intermediate cross member 30 and the side sill 3 are coupled to each other via the gusset 321 such that the ridgeline section 30a, which is formed in the corner portion between the erected section 34 and the coupling section 35, and the ridgeline section 3a, which is set to align the positions of the upper surfaces in the vehicle up-down direction, in the side sill 3 continue via the ridgeline section 321a of the gusset 321 (see FIGs. 5 and 6).

The rear cross member 40 that is arranged on the vehicle rear side of the intermediate cross member 30 has substantially the same configuration as the front cross member 20. More specifically, as illustrated in FIGs. 2, 3, and 4, the rear cross member 40 is provided to extend in the vehicle width direction across the tunnel section 5, and includes: in a central portion in the vehicle width direction, a crossing section 41 provided; and a pair of left and right member bodies 42, each of which extends in the vehicle width direction between an outer end portion of the crossing section 41 in the vehicle width direction and the respective side sill 3.

The crossing section 41 has substantially the same configuration as the crossing section 21, and in both end portions of the crossing section 41 in the vehicle width direction, a rear inner seat bracket 411 for attaching the front seat (not illustrated) is provided in a manner to extend across a boundary portion with the respective member body 42.

The rear inner seat bracket 411 has a substantially box shape in which an outer side in the vehicle width direction and the vehicle lower side are opened, and a vertical cross-sectional shape along the vehicle width direction has a closed cross section that is formed by the front floor panel 4, the tunnel section 5, and the rear cross member 40. In addition, the rear inner seat bracket 411 has, on an upper end surface, a rear inner attachment hole 412 for attaching the vehicle front side of the front seat. Here, the rear inner seat bracket 411 and the tunnel section 5 are fixed to each other when being joined by welding such as spot welding.

The member bodies 42 have substantially the same configurations as the member bodies 22, and are joined to the pair of left and right side sills 3 by rear outer seat brackets 421 that are provided in both end portions in the vehicle width direction.

The rear outer seat bracket 421 and the rear inner seat bracket 411 have substantially bilaterally symmetrical shapes. More specifically, the rear outer seat bracket 421 has a substantially box shape in which the outer side in the vehicle width direction and the vehicle lower side are opened, and a vertical cross-sectional shape along the vehicle front-rear direction has a closed cross section that is formed by the front floor panel 4, the tunnel section 5, and the rear cross member 40. The thus-configured rear outer seat brackets 421 are fixed to the pairs of left and right side sills 3 and member bodies 42 when being joined by welding such as spot welding. The rear outer seat bracket 421 has a ridgeline section 421a in an upper portion.

More specifically, an upper surface on the vehicle outer side of the rear outer seat bracket 421 is joined to the upper surface of the side sill 3 by welding such as spot welding, and an upper surface on the vehicle inner side of the rear outer seat bracket 421 is joined to a coupling section 45, which will be described below, by welding such as spot welding. Here, the rear outer seat bracket 421 has, on an upper end surface, a rear outer attachment hole 422 for attaching the vehicle front side of the front seat.

Similar to the front cross member 20, in the vertical cross section along the vehicle front-rear direction, such a rear cross member 40 is formed to have a substantially M-shaped cross section (see FIG. 4). More specifically, the rear cross member 40 includes a flange section 43, an erected section 44, and the coupling section 45, and, similar to the recessed groove 26, a recessed groove 46 having a cross member through hole 461 is provided to extend in the vehicle width direction in a central portion of the coupling section 45 in the vehicle front-rear direction.

Here, since the flange section 43, the erected section 44, the coupling section 45, the recessed groove 46, and the cross member through hole 461 have substantially the same configurations as the flange section 23, the erected section 24, the coupling section 25, the recessed groove 26, and the cross member through hole 261, respectively, a detailed description thereon will not be made. In addition, similar to the front cross member 20, the rear cross member 40 is formed with a pair of left and right ridgeline sections 40a in a corner portion between the erected section 44 and the coupling section 45 and a corner portion of the recessed groove 46 in the coupling section 45, the pair of left and right ridgeline sections 40a extending in the vehicle width direction at predetermined intervals in the vehicle front-rear direction (see FIG. 4).

As described above, the coupling section 45 and the side sill 3 are set such that the positions of the upper surfaces thereof are aligned in the vehicle up-down direction, and the rear outer seat bracket 421 is joined to each thereof. In this way, the rear cross member 40 and the side sill 3 are coupled to each other via the rear outer seat bracket 421 such that the ridgeline section 40a, which is formed in the corner portion between the erected section 44 and the coupling section 45, and the ridgeline section 3a, which is set to align the positions of the upper surfaces in the vehicle up-down direction, in the side sill 3 continue via the ridgeline section 421a of the rear outer seat bracket 421.

As illustrated in FIG. 4, the thus-configured front cross member 20, intermediate cross member 30, and rear cross member 40 are fixed to each other. More specifically, a front flange section 33a, which is provided on the vehicle front side, of the flange sections 33 in the vehicle front-rear direction of the intermediate cross member 30 is arranged such that the rear flange section 23b, which is provided on the vehicle rear side of the front cross member 20, is arranged on top thereof, and is joined to the front floor panel 4. In addition, a rear flange section 33b, which is provided on the vehicle rear side, of the flange sections 33 in the vehicle front-rear direction of the intermediate cross member 30 is arranged on a vehicle upper side of a front flange section 43a, which is provided on the vehicle front side of the rear cross member 40, and is joined to the upper surface of the front floor panel 4 via the front flange section 43a.

Here, the vehicle front side of the front seat can be attached to the front inner seat bracket 211 and the front outer seat bracket 221, which are provided on the front cross member 20, and the vehicle rear side of the front seat can be attached to the rear inner seat bracket 411 and the rear outer seat bracket 421, which are provided on the rear cross member 40. That is, in the vehicle front-rear direction, the intermediate cross member 30, which is arranged between the front cross member 20 and the rear cross member 40, is arranged on the vehicle lower side of the front seat.

The battery unit 7, which is arranged below the front floor panel 4, is a substantially rectangular structure in the plan view, and includes: battery modules 71 that are arranged side by side in the vehicle width direction; and a casing 72 that accommodates and holds the battery modules 71 therein (see FIGs. 1, 4, and 5).

The battery module 71 is a lithium-ion battery in which plural battery cells are electrically connected, for example, and is formed in a substantially rectangular shape that is long in the vehicle front-rear direction in the plan view.

As illustrated in FIGs. 5 and 6, the casing 72 is formed in a substantially annular shape that serves as a frame body of the battery unit 7 and has the substantially rectangular shape in the plan view, and is joined to the highly rigid portion of the body via plural coupling members 80. More specifically, the casing 72 includes a battery frame 73, a bottom plate section 74 that closes an opening on the vehicle lower side of the battery frame 73; and a top plate section 75 that closes an opening on the vehicle upper side of the battery frame 73. Here, the highly rigid portions of the body include the side sills 3, a rear cross member that couples rear side frames (not illustrated) in the vehicle width direction, and a torque box that couples the front portions of the side sills 3 and the front side frame.

The battery frame 73 is a highly rigid frame body that has a substantially rectangular shape in the plan view, and is configured to be able to fixedly fasten the accommodated battery module 71. In addition, the battery frame 73 is fixedly fastened to the highly rigid portion including a frame member, such as the side sill 3, that forms the body frame structure.

As illustrated in FIG. 6, a central portion of the battery frame 73 in the vehicle width direction is provided with: a front-rear direction frame 76 that couples frames on the vehicle front side and the vehicle rear side in the battery frame 73, which has a rectangular shape in the plan view, in the vehicle front-rear direction; an intermediate frame 77 that is arranged on the vehicle upper side of the front-rear direction frame 76; and a support section 78 that supports the intermediate frame 77.

As illustrated in FIGs. 6 and 7, in a transverse cross section along the vehicle width direction, the front-rear direction frame 76 is formed to have a substantially hat-shaped cross section that protrudes upward in a substantially rectangular shape in the vehicle, and couples the frames on the vehicle front side and the vehicle rear side in the battery frame 73, which has a substantially rectangular shape in the plan view, in the vehicle front-rear direction. In addition, the front-rear direction frame 76 has a flange (not denoted by a reference sign) that extends in the vehicle width direction and is provided from a front end to a rear end thereof in the vehicle front-rear direction, and joins the flange to the bottom plate section 74 by welding such as spot welding. In this way, the front-rear direction frame 76 improves rigidity of the battery frame 73 and rigidity of a central portion of the bottom plate section 74 in the vehicle width direction.

As illustrated in FIGs. 6 and 7, in the transverse cross section along the vehicle front-rear direction, the intermediate frame 77 has a concave cross-sectional shape that is opened upward, and is arranged on the vehicle upper side at a predetermined interval from an upper surface of the front-rear direction frame 76. In addition, in a central portion of the intermediate frame 77 in the vehicle width direction, intermediate through holes 771, each of which penetrates in the up-down direction and has a circular shape in the plan view, are provided at predetermined intervals in the vehicle front-rear direction in a manner to be arranged on the vehicle lower side of and oppose the through holes 53 provided in the tunnel upper portion 52.

As illustrated in FIG. 6, the support section 78 is a support member that supports the intermediate frame 77 in a manner to be provided on the vehicle upper side of the upper surface of the front-rear direction frame 76 at predetermined intervals. More specifically, a lower end portion of the support section 78 is coupled to the front-rear direction frame 76, and an upper end portion of the support section 78 is coupled to an outer portion in the vehicle width direction of a lower surface of the intermediate frame 77. In this way, on the vehicle upper side of the front-rear direction frame 76, the support section 78 supports the intermediate frame 77 at the predetermined interval from the front-rear direction frame 76. Here, the height of the support section 78 is set such that the distance between the upper surface of the intermediate frame 77 and a lower surface of the top plate section 75 in the vehicle up-down direction is equal to the distance between an upper surface of the top plate section 75 and a lower surface of the tunnel upper portion 52 in the vehicle up-down direction.

As illustrated in FIG. 5, the bottom plate section 74 is a plate member that has a thickness in the up-down direction, and is configured to be able to be fixedly fastened to the battery frame 73.

As illustrated in FIGs. 5 and 6, the top plate section 75 is a plate member that has a thickness in the up-down direction, and is configured to be able to be fixedly fastened to the upper surface of the battery frame 73. In addition, as illustrated in FIG. 7, in the top plate section 75, plural top plate through holes 751, each of which penetrates in the vehicle up-down direction and has a circular shape in the plan view, are provided in the vehicle front-rear direction in a manner to be arranged to oppose the through holes 53 and the intermediate through holes 771. Here, each of the top plate through holes 751 has substantially the same shape as the respective through hole 53 and the respective intermediate through hole 771 in the plan view. The coupling member 80 is arranged between the thus-configured top plate through hole 751 and the intermediate through hole 771 and between the top plate through hole 751 and the through hole 53.

As illustrated in FIGs. 5 and 6, the coupling member 80 couples the tunnel section 5 and the battery unit 7 via a fastening bolt V.

More specifically, as illustrated in FIG. 6, the coupling member 80 is integrally formed by a shaft section 81 that extends in an axial direction along the vehicle up-down direction and a body section 82 that extends to one side in the axial direction of the shaft section 81.

The shaft section 81 is formed in a substantially columnar shape that has a thread, to which a nut N can be screwed, on an outer circumferential surface (see FIGs. 6 and 7). Here, an axial length of the shaft section 81 is shorter than the distance between the front-rear direction frame 76 and the intermediate frame 77 in the vehicle up-down direction.

As illustrated in FIGs. 6 and 7, the body section 82 is formed in a length that is equal to the distance between the upper surface of the intermediate frame 77 and the lower surface of the top plate section 75. In addition, as illustrated in FIG. 6, the body section 82 is formed in the substantially columnar shape that has a larger diameter than the shaft section 81 and extends from the shaft section 81. When the shaft section 81 is inserted through the intermediate through hole 771, a lower end surface of the thus-configured body section 82 abuts the upper surface of the intermediate frame 77, and an upper end surface thereof abuts the lower surface of the top plate section 75.

In addition, as illustrated in FIG. 6, the body section 82 of the coupling member 80 is formed with a screw hole 821 that is recessed from the upper end surface along the axial direction. More specifically, the screw hole 821 of the body section 82 has substantially the same structure as the screw hole for the nut N, and is formed from the upper end surface of the body section 82 to the vicinity of the substantial center in the axial direction of the body section 82. The shaft section 81 of the coupling member 80 as a separate body can be screwed into the thus-configured screw hole 821 from the vehicle upper side.

Here, the fastening bolt V, which fastens the coupling member 80 from the vehicle upper side, is a hexagonal bolt that has the same diameter as the shaft section 81 and is screwed to the screw hole 821, which is provided at the upper end of the body section 82 in the coupling member 80 (see FIG. 6).

As illustrated in FIGs. 5, 6, and 7, the thus-configured coupling member 80 couples the tunnel section 5, the floor cross member 6, and the battery unit 7.

More specifically, the nut N is fastened to the shaft section 81, which is inserted through the intermediate through hole 771, in the coupling member 80 arranged between the top plate section 75 and the intermediate frame 77, and is screwed onto the shaft section 81 of the other coupling member 80, which is inserted through the top plate through hole 751 from the vehicle upper side of the top plate section 75. In this way, the coupling member 80, which is arranged between the top plate section 75 and the intermediate frame 77, and the top plate section 75 are fixed.

In addition, the coupling member 80, in which the shaft section 81 inserted through the top plate through hole 751 is screwed into the screw hole 821 of the coupling member 80 arranged between the top plate section 75 and the intermediate frame 77, is arranged between the top plate section 75 and the tunnel upper portion 52 in a state of abutting the upper surface of the top plate section 75 and the lower surface of the tunnel upper portion 52 (see FIGs. 5, 6, and 7). Then, from the cabin inner side, the fastening bolt V, which is inserted through the cross member through holes 261, 361, 461 respectively provided to the crossing sections 21, 31, 41 in the front cross member 20, the intermediate cross member 30, and the rear cross member 40 extending across the tunnel section 5 and the through hole 53 provided to the tunnel upper portion 52 of the tunnel section 5, is fastened to the coupling member 80 arranged between the top plate section 75 and the tunnel upper portion 52 (see FIGs. 5, 6, and 7).

Just as described, in the lower body structure of the vehicle 1, the coupling member 80, which is arranged between the top plate section 75 and the intermediate frame 77, and the coupling member 80, which is arranged between the top plate section 75 and the tunnel upper portion 52, couple the tunnel section 5, the floor cross member 6, and the battery unit 7 by fastening the fastening bolt V.

In this way, as illustrated in FIG. 7, in the lower body structure of the vehicle 1, the plural coupling members 80 are arranged in the vehicle front-rear direction between the top plate section 75 and the tunnel upper portion 52 in a manner to correspond to the position of each of the through holes 53, which are provided at the predetermined intervals in the vehicle front-rear direction. In the state where the upper end surface of the coupling member 80 abuts the lower surface of the tunnel upper portion 52 and the lower end surface of the coupling member 80 abuts the upper surface of the top plate section 75, these coupling members 80 couple the battery unit 7, which accommodates and holds the battery modules 71 therein, in the casing 72 to the tunnel section 5 and the floor cross member 6.

In addition, the battery unit 7, which is coupled to the pair of left and right side sills 3 as body frame members of the vehicle 1, fixedly couples each of the front cross member 20, the intermediate cross member 30, and the rear cross member 40, which are fixed to each other and each couple the pair of left and right side sills 3 across the tunnel section 5, to the tunnel section 5 in the tunnel upper portion 52 of the tunnel section 5 as the central portion in the vehicle width direction. As a result, in the lower body structure of the vehicle 1, body rigidity of the vehicle 1 is improved.

Such a lower body structure of the vehicle 1 includes: the tunnel section 5 that protrudes upward at the central position in the vehicle width direction of the front floor panel 4; the pair of left and right side sills 3 that extend in the vehicle front-rear direction at both lateral ends of the front floor panel 4 in the vehicle width direction; the floor cross member 6 that couples the pair of left and right side sills 3 in the vehicle width direction across the tunnel section 5 and is fixed to the upper surface of the front floor panel 4; and the battery unit 7 that is disposed below the front floor panel 4. Then, the portion of the floor cross member 6 that extends across the tunnel section 5 is coupled to the tunnel section 5 and the battery unit 7 via the coupling member 80.

The thus-configured lower body structure of the vehicle 1 suppresses upward displacement of the tunnel section 5 by the side collision load applied from the vehicle lateral side.

More specifically, the floor cross member 6 couples the pair of left and right side sills 3 in the vehicle width direction across the tunnel section 5, and the portion thereof across the tunnel section 5 couples the tunnel section 5 and the battery unit 7 via the coupling member 80. Accordingly, in the lower body structure of the vehicle 1, the floor cross member 6 can efficiently transmit the side collision load, which is the collision load from the vehicle lateral side, from the one side sill 3 to the other side sill 3, and the battery unit 7 as a highly rigid heavy object can suppress the upward displacement of the tunnel section 5 by the side collision load.

In addition, in the portion across the tunnel section 5, the lower body structure of the vehicle 1 is coupled to the tunnel section 5 and the battery unit 7 via the coupling member 80. Thus, there is no need to provide a reinforcing member for suppressing the deformation of the tunnel section 5 by the side collision load. Thus, the lower body structure of the vehicle 1 can suppress the upward displacement of the tunnel section 5 while suppressing an increase in the number of components.

The coupling member 80 abuts both the upper surface of the battery unit 7 and the lower surface of the tunnel section 5, extends in the up-down direction, and is fastened by the fastening bolt V, which is inserted through the floor cross member 6 and the tunnel section 5, from the upper side of the floor cross member 6. In this way, in the portion across the tunnel section 5, the fastening bolt V can be inserted through the floor cross member 6 and the tunnel section 5 from the cabin inner side and be fastened to the coupling member 80. Thus, it is possible to easily couple to the battery unit 7, which is disposed below the front floor panel 4, the floor cross member 6, and the tunnel section 5. Therefore, the lower body structure of the vehicle 1 can improve workability of coupling work to couple the battery unit 7 to the floor cross member 6 and the tunnel section 5.

Furthermore, the coupling member 80 is arranged at the center of the tunnel section 5 in the vehicle width direction. In this way, the lower body structure of the vehicle 1 can reliably suppress the displacement of the central portion of the tunnel section 5 in the vehicle width direction, the central portion being most likely to be displaced upward by the side collision load.

The plural floor cross members 6 are provided side by side in the vehicle front-rear direction, and each of the floor cross members 6 is coupled to the battery unit 7 via the coupling member 80. In this way, each of the plural floor cross members 6, which are provided side by side in the vehicle front-rear direction, is coupled to the tunnel section 5 and the battery unit 7 via the coupling member 80. Thus, compared to a case where the single floor cross member 6 is coupled to the battery unit 7, the lower body structure of the vehicle 1 can reliably suppress the upward displacement of the tunnel section 5 by the side collision load within a predetermined range in the vehicle front-rear direction.

Furthermore, the floor cross members 6 have: the front cross member 20 provided on the vehicle front side; the rear cross member 40 provided at the position on the vehicle rear side at the predetermined interval from the front cross member 20; and the intermediate cross member 30 provided between the front cross member 20 and the rear cross member 40 in the vehicle front-rear direction and fixed to each of the front cross member 20 and the rear cross member 40.

In this way, the intermediate cross member 30 is fixed to each of the front cross member 20 and the rear cross member 40, and each of the floor cross members 6 is fixed to the upper surface of the front floor panel 4. Thus, the front cross member 20, the rear cross member 40, and the intermediate cross member 30, which are fixed to each other, can improve the rigidity of the body against the side collision load, which is the collision load from the vehicle lateral side, in cooperation with the front floor panel 4.

As a result, the lower body structure of the vehicle 1 can efficiently transmit the side collision load, which is applied from the vehicle lateral side, from the one side sill 3 to the other side sill 3 via the front cross member 20, the rear cross member 40, and the intermediate cross member 30, which are fixed to each other. Therefore, for example, even when the narrow collision object, such as the utility pole, collides with a vehicle lateral portion, the lower body structure of the vehicle 1 can further suppress the upward displacement of the tunnel section 5.

The battery unit 7 is fixed to the highly rigid portion in the body of the vehicle 1, and the front inner seat bracket 211 and the rear inner seat bracket 411 for attaching the seat are provided in the portion of the floor cross member 6 across the tunnel section 5.

In this way, the lower body structure of the vehicle 1 can suppress the displacement of the seat in the vehicle up-down direction. Thus, it is possible to prevent an occupant who is seated on the seat from having a feeling of strangeness and a sense of discomfort.

More specifically, since the coupling member 80, which couples the tunnel section 5 and the battery unit 7, supports the tunnel section 5 from below in the vehicle, it is possible to suppress the displacement of the tunnel section 5 in the vehicle up-down direction, which is caused by the load in the vehicle up-down direction applied to the front inner seat bracket 211 and the rear inner seat bracket 411.

More specifically, since the displacement of the tunnel section 5 in the vehicle up-down direction can be suppressed, it is possible to suppress sinking of the seat, which is attached to the portion of the floor cross member 6 across the tunnel section 5, due to the load in the vehicle up direction or the vehicle down direction that is associated with movement of a load of the occupant seated on the seat occurring, for example, when the vehicle 1 turns and that is applied to the front inner seat bracket 211 and the rear inner seat bracket 411 via the seat. Therefore, the lower body structure of the vehicle 1 can prevent the occupant who is seated on the seat from having the feeling of strangeness with respect to steering stability or having the sense of discomfort due to sinking of the seat.

In correspondence between the configuration in the invention and the above-described embodiment, the floor panel in the invention corresponds to the front floor panel 4 in the embodiment. Hereinafter, similarly, the cross member corresponds to the floor cross member 6, the bolt corresponds to the fastening bolt V, the first cross member corresponds to the front cross member 20, the second cross member corresponds to the rear cross member 40, the third cross member corresponds to the intermediate cross member 30, and the seat attachment section corresponds to the front inner seat bracket 211 and the rear inner seat bracket 411. However, the invention is not limited only to the configuration in the above-described embodiment, and many embodiments can be obtained.

For example, the floor cross member 6 (the front cross member 20, the intermediate cross member 30, and the rear cross member 40) has the closed cross-sectional shape that forms the closed cross section with the front floor panel 4. However, the invention is not limited thereto, and the floor cross member 6 (the front cross member 20, the intermediate cross member 30, and the rear cross member 40) may join the closed cross-sectional shape such as a cylindrical body to the front floor panel 4.

In addition, although the battery unit 7 is coupled to the body frame member such as the side sill 3, it may be coupled to another position. That is, the battery unit 7 only needs to be coupled to a portion in which a vertical cross-sectional shape along the vehicle front-rear direction or the vehicle width direction is a closed cross-sectional shape, more preferably, to the highly rigid portion such as the body frame member constituting the body frame of the vehicle 1, and examples thereof include the torque box, which couples the floor frame, the rear portion of the front side frame, or the front side frame to the side sill 3, or the like.

### Reference Signs List:

1 vehicle
3 side sill
4 front floor panel
5 tunnel section
6 floor cross member
7 battery unit
20 front cross member
30 intermediate cross member
40 rear cross member
80 coupling member
211 front inner seat bracket
411 rear inner seat bracket
V fastening bolt

## Claims

1. A vehicle lower body structure comprising:
a tunnel section (5) that protrudes upward in a central position of a floor panel (4) in a vehicle width direction;
a pair of left and right side sills (3) that extend in a vehicle front-rear direction at both lateral ends of the floor panel (4) in the vehicle width direction;
a floor cross member (6) that couples the pair of left and right side sills (3) in the vehicle width direction across the tunnel section (5) and is fixed to an upper surface of the floor panel (4); and
a battery unit (7) that is disposed below the floor panel (4), wherein
a portion of the floor cross member (6) across the tunnel section (5) is coupled to the tunnel section (5) and the battery unit (7) via a coupling member (80).

2. The vehicle lower body structure according to claim 1, wherein
the coupling member (80) abuts both an upper surface of the battery unit (7) and
a lower surface of the tunnel section (5), extends in an up-down direction, and is fastened by a bolt (V), which is inserted through the floor cross member (6) and the tunnel section (5), from an upper side of the floor cross member (6).

3. The vehicle lower body structure according to claim 1, wherein
the coupling member (80) is arranged at a center of the tunnel section (5) in the vehicle width direction.

4. The vehicle lower body structure according to claim 1, wherein
a plurality of the floor cross members (6) are arranged side by side in the vehicle front-rear direction, and
each of the floor cross members (6) is coupled to the battery unit (7) via the coupling member (80).

5. The vehicle lower body structure according to claim 4, wherein
the floor cross member (6) has:
a first cross member (20) that is provided on a vehicle front side;
a second cross member (40) that is provided at a position on a vehicle rear side at a predetermined interval from the first cross member (20); and
a third cross member (30) that is provided between the first cross member (20) and the second cross member (40) in the vehicle front-rear direction and is fixed to each of the first cross member (20) and the second cross member (40).

6. The vehicle lower body structure according to claim 2, wherein
the battery unit (7) is fixed to a highly rigid portion in a body of a vehicle, and
a seat attachment section for attaching a seat is provided in the portion of the floor cross member (6) across the tunnel section (5), wherein the seat attachment section includes at least a front inner seat bracket (211) and/or a rear inner seat bracket (411).

7. The vehicle lower body structure according to any one of the preceding claims, "wherein the front cross member (20), the rear cross member (40), and the intermediate cross member (30), which are fixed to each other, can improve the rigidity of the body against the side collision load, which is the collision load from the vehicle lateral side, in cooperation with the front floor panel (4).

8. The vehicle lower body structure according to any one of the preceding claims, wherein the coupling member (80), which couples the tunnel section (5) and the battery unit (7), supports the tunnel section (5) from below in the vehicle.

9. The vehicle lower body structure according to any one of the preceding claims, wherein the battery unit (7), which is coupled to the pair of left and right side sills (3) as body frame members of the vehicle (1), fixedly couples each of the front cross member (20), the intermediate cross member (30), and the rear cross member (40), which are fixed to each other and each couple the pair of left and right side sills (3) across the tunnel section (5), to the tunnel section (5) in the tunnel upper portion (52) of the tunnel section (5) as the central portion in the vehicle width direction.

10. The vehicle lower body structure according to any one of the preceding claims, wherein the fastening bolt (V) can be inserted through the floor cross member (6) and the tunnel section (5) from the cabin inner side and be fastened to the coupling member (80).
